# NOUVEAU FASCICULE DE BREVET EUROPEEN

(11) **EP 2 080 428 B2**
(45) Date de publication et mention de la décision concernant l'opposition: **18.09.2019**
(45) Mention de la délivrance du brevet: 13.01.2016
(21) Numéro de dépôt: 09150518.0
(22) Date de dépôt: 14.01.2009
(51) Int. Cl.: A01B 79/00, A01B 63/00

(54) **Procédé de commande d'une action ou d'une séquence d'actions**
Prozess für Bedienung einer Aktion oder einer Aktionssequenz
Process of command of an action or a sequence of actions

(30) Priorité: 18.01.2008 FR 0850300
(43) Date de publication de la demande: 22.07.2009
(73) Titulaire: KUHN S.A., 67700 Saverne (FR)
(72) Inventeur: Renard, Hervé, 67520 MARLENHEIM (FR); Le Bars, Jean-Michel, 67790 STEINBOURG (FR); Kirch, Michel, 67260 KESKASTEL (FR)
(74) Mandataire: Arbousse, Olivier

(56) Documents cités:
- EP-A- 0 916 244
- EP-A- 1 044 591
- EP-A- 1 584 223
- EP-A1- 0 477 041
- EP-A1- 0 626 126
- EP-A1- 0 916 244
- EP-A1- 1 344 443
- EP-A1- 1 584 223
- EP-A2- 0 838 141
- EP-A2- 1 013 159
- EP-A2- 1 044 591
- EP-A2- 1 051 895
- EP-A2- 1 082 887
- EP-A2- 1 088 474
- EP-A2- 1 666 996
- DE-A1- 3 310 424
- DE-A1- 3 502 011
- DE-A1- 3 642 502
- DE-A1- 4 442 479
- DE-A1- 10 335 112
- DE-A1- 10 335 112
- DE-A1- 19 717 422
- DE-A1- 19 943 561
- DE-A1- 19 943 561
- DE-B3- 10 304 377
- DE-T2- 60 122 006
- DE-T2- 69 107 751
- FR-A- 2 764 401
- FR-A1- 2 764 401
- US-A- 4 261 495
- US-A- 6 076 611
- R. FREIMANN ET AL: "Gerät steuert Traktor: Optimierungsmöglichkeiten der Gespannführung", VDI-Berichte, vol. 1544, 2000, pages 201-206, Düsseldorf, DE
- N. KÜFFNER: "AUSRÜSTUNG EINES TRAKTOR-GERÄTE-GESPANNS MIT ELEKTRONIK UND SENSORIK ZUR AUTONOMEN PROZESSFÜHRUNG", Lehrstühl für Landsmaschinen, Technische Universität München, DE, 2001, pages 1-14,
- M. SCHMIDT: "System- und Risikoanalyse landwirtschaftlicher Arbeitsmaschinen", LEHRSTUHL FÜR LANDMASCHINEN, Technische Universität München, DE, 2000, pages 32-35-36-37,

## Description

La présente invention concerne un procédé de commande d'une action ou d'une séquence d'actions pour une machine agricole équipée d'un boîtier électronique et attelée à un tracteur, ledit tracteur comprenant au moins un moyen de commande.

La présente invention trouvera son application dans le domaine du machinisme agricole. Ce domaine a fait l'objet de nombreuses innovations technologiques dues principalement à l'introduction de l'électronique. Ces innovations consistent à améliorer des fonctions existantes tant du côté du tracteur que de la machine agricole.

Pour accomplir les divers travaux des champs et/ou la récolte des fourrages, il est usuel d'utiliser des machines agricoles animées par des tracteurs. Un tracteur présente notamment un moteur, un poste de conduite, des moyens de commande manoeuvrés par un dispositif de commande respectif et un calculateur. Le dispositif de commande comprend des leviers et/ou boutons pour commander différents moyens de commande tels que les relevages arrière et avant, les arbres de prise de force arrière et avant, les distributeurs hydrauliques. Le calculateur est pourvu d'une mémoire et d'au moins un programme. Le calculateur est notamment relié à un sous-ensemble calculateur pour le pilotage du relevage et un sous-ensemble calculateur pour le pilotage du moteur et de la transmission.

La conduite d'un tracteur impose à l'utilisateur de nombreuses actions répétitives, notamment lors de l'exécution d'un travail dans une parcelle (labour, préparation du sol, semis) où un demi-tour doit être effectué à chaque extrémité. L'utilisateur doit, dans un temps très court et dans un ordre déterminé, lancer et/ou arrêter plusieurs moyens de commande au moyen du dispositif de commande. Pour réduire la pénibilité et prévenir les erreurs de manipulation au niveau des leviers et des boutons, la suite d'actions lors d'un demi-tour peut être enregistrée dans le programme du calculateur sous forme de séquence. Une séquence est un ensemble d'actions à réaliser dans un ordre logique, chronologique et dans un temps donné. Le programme est constitué d'une suite de séquences. Ainsi, la séquence demi-tour enregistrée peut être simplement reproduite, de manière automatique, à chaque extrémité du champ à partir d'une seule intervention au niveau du dispositif de commande du tracteur.

Les machines agricoles comprennent un ensemble d'organes spécifiques destinés à une tâche déterminée. Cet ensemble d'organes rend l'utilisation de la machine plutôt complexe. Ainsi, il est connu de commander cette machine agricole au moyen d'un boîtier électronique. Le boîtier électronique, constitué d'un microprocesseur associé à un ou plusieurs programmes, pilote les différents organes spécifiques via des séquences. Le programme est adapté à la machine et en particulier aux différentes fonctions exploitables par la machine. Le microprocesseur reçoit et traite les informations du système de surveillance et les interventions issues du pupitre de commande. De même que pour le tracteur, le programme de la machine peut contenir un enchaînement d'actions à effectuer. Ainsi, lors d'un demi-tour, une seule intervention de l'utilisateur sur le pupitre de commande de la machine agricole lance automatiquement la séquence adéquate. Les différentes actions au niveau de la machine se déroulent selon la séquence prédéfinie en tenant compte, si besoin, des signaux fournis par le système de surveillance.

L'électronique de commande du tracteur est indépendante de l'électronique de commande de la machine attelée au tracteur. Ainsi, en approche d'une extrémité de parcelle, l'utilisateur déclenche la séquence de demi-tour du tracteur à partir du dispositif de commande puis lance la séquence de demi-tour de la machine via le pupitre de commande. Durant cette manoeuvre, l'utilisateur doit contrôler la direction et la vitesse du tracteur, le cas échéant il doit changer de vitesse. Il doit également maîtriser la conduite en fonction des caractéristiques du tracteur utilisé (angle maximal de braquage, blocage du différentiel) et adapter la manoeuvre selon qu'il travaille avec une machine étroite ou large, courte ou longue. Les manoeuvres de demi-tour nécessitent donc de l'expérience et de la concentration.

Le document FR 2 764 401 se rapporte à un procédé d'automatisation de tâches répétitives effectuées par le conducteur d'un tracteur agricole lorsqu'une machine est attelée à celui-ci. Ce procédé comprend une étape de mémorisation d'actions engagées par le conducteur sur les commandes classiques du tracteur et une étape de reproduction de ces actions à réception d'un ordre de commande du conducteur. Les actions mémorisées sont celles engagées par le conducteur lors de l'exécution manuelle d'une séquence de tâches répétitives rencontrées pendant les opérations de demi-tours, par exemple. Les paramètres inhérents de la machine doivent être préalablement introduits dans le calculateur du tracteur pour pouvoir être pris en compte. Une telle solution arrive néanmoins à ses limites lorsqu'il s'agit de commander une machine plus complexe disposant de ces propres moyens de commande et actionneurs. Le calculateur du tracteur ne peut alors ni connaître, ni maîtriser les actions propres à la machine faute d'un réseau de communication suffisamment élaboré.

Dans le cas où, une machine est équipée d'un boîtier électronique avec son programme de fonctionnement, l'utilisateur doit introduire les paramètres liés au tracteur dans le boîtier électronique. Les paramètres liés au tracteur doivent être reconfigurés en cas de changement du tracteur.

Le document DE 199 43 561 divulgue un tracteur avec un calculateur qui contient des programmes de réglage et/ou de fonctionnement pour différentes machines. Le choix du programme adéquat par le calculateur pour le pilotage de la machine suppose qu'il existe un réseau de communication suffisamment élaboré pour que le tracteur puisse connaître et maîtriser les actions propres de la machine. A ce jour un tel réseau standard, permettant une communication entre les machines et les différents tracteurs disponibles sur le marché, n'existe pas.

Le document DE 103 35 112 se rapporte à une machine agricole comprenant un boîtier électronique et plusieurs capteurs réalisant un système de surveillance propre à la machine. Ces capteurs donnent des informations au boîtier électronique via une liaison sans fil pour le réglage des paramètres de fonctionnement de la machine. Ces capteurs ne permettent donc pas de détecter un changement d'état d'un moyen de commande tel qu'un arbre de prise de force du tracteur.

La présente invention a pour but de remédier aux inconvénients précités. Dans ces conditions, l'invention se propose de mettre en oeuvre un procédé de commande permettant de simplifier les manipulations de l'utilisateur d'une machine agricole.

A cet effet, une importante caractéristique de l'invention consiste en ce que l'action ou la séquence d'actions à réaliser pour la machine agricole est déclenchée de manière automatique, via le contrôle dudit boîtier électronique par détection d'un changement d'état d'un des moyens de commande dudit tracteur par l'intermédiaire d'un système de surveillance qui renseigne ledit boîtier électronique. Ainsi, la commande d'une ou plusieurs actions ne dépend pas de l'expérience ni de la technicité de l'utilisateur. Le procédé de commande de l'invention permet à l'utilisateur de la machine d'être déchargé de la commande des organes de la machine. La coordination de commande entre le tracteur et la machine agricole est optimisée. Par ailleurs, ce procédé de commande est adaptable quel que soit le tracteur qui est attelé à la machine.

La présente invention concerne également une machine agricole pour la mise en oeuvre d'un tel procédé.

D'autres caractéristiques et avantages de l'invention se dégageront des revendications et de la description qui va suivre des exemples de réalisation non limitatifs de l'invention avec référence aux dessins annexés dans lesquels :
- la **figure 1** représente, de manière schématique, une machine agricole reliée à un tracteur selon l'invention,
- la **figure 2** est une vue latérale selon un premier exemple de réalisation d'une machine attelée à un tracteur,
- la **figure 3** représente une vue de dessus selon un deuxième exemple de réalisation d'une machine selon l'invention,
- la **figure 4** représente une vue de détail arrière d'une partie de la machine de la figure 3.

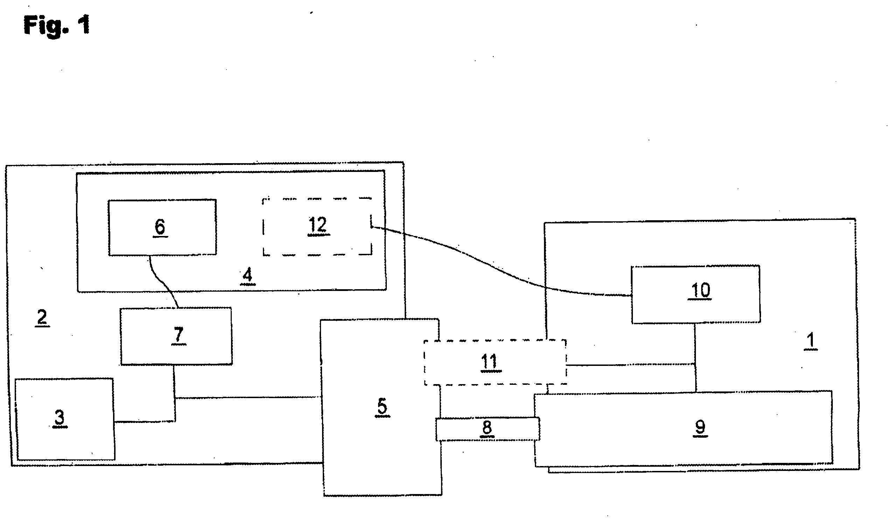

La figure 1 représente schématiquement une machine agricole (1) reliée à un tracteur (2). La machine agricole (1) est destinée à accomplir des fonctions de travail (préparation du sol, semis, fanage, etc.). Le tracteur comprend, d'une manière connue, un organe de transmission entraîné par un moteur (3), un poste de conduite (4), au moins un moyen de commande (5) manoeuvré respectivement par un dispositif de commande (6) et un calculateur (7). Le calculateur est composé de plusieurs sous-ensembles calculateur. Le calculateur (7) intègre des fonctions de calculs, il est l'unité de contrôle électronique du tracteur (2). Le calculateur (7) permet de surveiller les paramètres de fonctionnement du tracteur (2) et de détecter d'éventuels problèmes, pour cela il est relié à l'ensemble des capteurs et des sondes qui fournissent des informations sur l'état du moteur (3) et des moyens de commande (5).

La machine agricole (1) comprend un dispositif d'attelage (8), un ensemble d'organes spécifiques (9) destiné à une tâche déterminée et un boîtier électronique (10). Le boîtier électronique (10) est constitué d'un microprocesseur associé à un ou plusieurs programmes et pilote les différents organes spécifiques via des séquences. La machine comprend, selon le cas, un pupitre de commande (12). La machine (1) est attelée au tracteur (2) via le dispositif d'attelage (8). Le tracteur (2) entraîne la machine (1) dans son déplacement dans une direction (A) et actionne éventuellement ses organes spécifiques (9).

L'animation d'un au moins des moyens de commande (5) du tracteur (2) et/ou d'un ou plusieurs organes spécifiques (9) de la machine (1) est contrôlée par un système de surveillance (11). Ce système de surveillance (11) permet de faire le relevé des caractéristiques de fonctionnement du tracteur (2) et/ou de la machine (1). Le système de surveillance (11) est composé de capteurs et/ou de sondes. Les capteurs ou les sondes appropriés sont choisis en fonction du type de moyen de commande (5) ou d'organe spécifique de la machine à surveiller. Les informations relevées par l'intermédiaire de ces capteurs ou sondes sont envoyées au boîtier électronique (10) qui est capable de les interpréter. Il existe des capteurs aptes à mesurer une pression, un débit ou une vitesse de rotation. Toute autre forme de capteur donnant des informations permettant de déduire les caractéristiques de fonctionnement d'un moyen de commande (5) ou d'un organe spécifique peut être utilisée.

Selon une importante caractéristique de l'invention, l'action ou la séquence d'actions à réaliser, au niveau de ladite machine (1), est déclenchée de manière automatique via le contrôle du boîtier électronique (10) par détection d'un changement d'état d'un des moyens de commande (5) dudit tracteur (2) par l'intermédiaire d'un système de surveillance (11) qui renseigne ledit boîtier électronique (10).

Ainsi, un changement d'état d'un des moyens de commande (5) en liaison avec la machine (1) est détecté via ledit système de surveillance (11). Le système de surveillance (11) renseigne alors le boîtier électronique (10). La détection de changement d'état d'un des moyens de commande (5) entraîne, via le contrôle dudit boîtier électronique (10), la commande d'une action ou d'une séquence d'actions pour ladite machine (1). Une séquence est une action ou un ensemble d'actions à réaliser dans un ordre logique, chronologique et dans un temps donné. Le tracteur (2) anime la machine (1), qui comporte des pièces rotatives et/ou des vérins, via au moins un moyen de commande (5). La commande d'une action se fait exclusivement via le contrôle du boîtier électronique (10) de la machine (1) dans le mode automatique. Grâce à cette détection d'un changement d'état, la coordination de commande entre le tracteur (2) et la machine (1) est optimisée. Ainsi, la commande d'au moins un organe spécifique de la machine (1) ne dépend ni de l'expérience, ni de la technicité de l'utilisateur.

Le mode automatique est le mode de détection des commandes d'au moins un moyen de commande (5) du tracteur (2). Dans ce mode, la détection du changement d'état d'un moyen de commande (5) entraîne la commande d'une ou de plusieurs actions au niveau de la machine (1). Grâce à cette détection le boîtier électronique (10) de la machine (1) est informé de l'action ou de l'intention de l'utilisateur, notamment par rapport à sa manipulation au niveau du dispositif de commande (6) du tracteur (2). Le changement d'état d'un des moyens de commande (5) peut aussi faire partie d'une séquence du tracteur (2) préalablement lancée par l'utilisateur.

Selon un mode de réalisation préférentiel, le système de surveillance (11) se base uniquement sur le(s) capteur(s) relatif(s) à la machine (1). Il contrôle les capteurs qui sont placés sur la machine (1) et renseigne le boîtier électronique (10) de la machine (1). Dans un autre mode de réalisation, les capteurs peuvent être placés d'une part sur la machine (1) et d'autre part sur le tracteur (2). Dans un autre cas, les capteurs sont placés uniquement au niveau dudit tracteur (2) et le boîtier électronique (10) a un accès à l'information via un réseau de communication ou à une prise d'information directe dans le poste de conduite (4) au travers d'un connecteur de signaux.

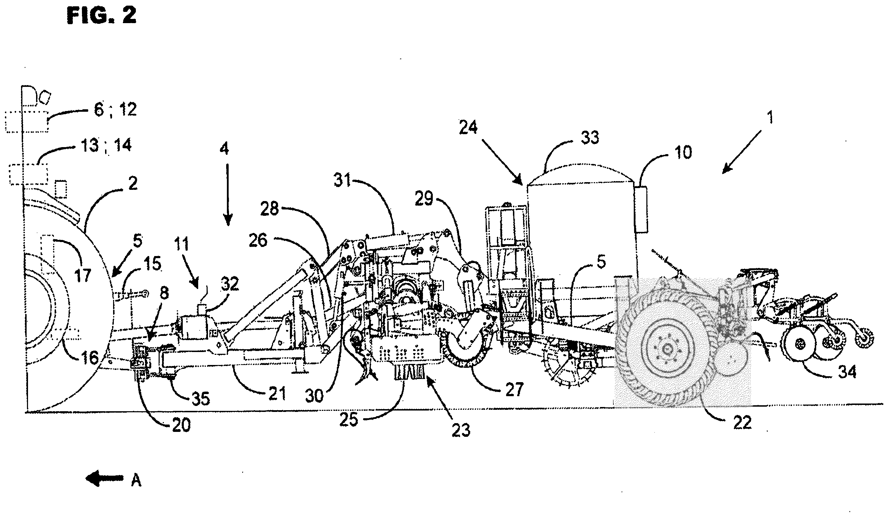

Le dispositif de commande (6) du tracteur (2) est intégré dans le poste de conduite (4). Il est composé d'une interface de commande et/ou d'un écran pour afficher les informations communiquées par le calculateur (7) à l'utilisateur. L'interface de commande permet de manoeuvrer les moyens de commande (5) par l'intermédiaire des commandes classiques telles que des leviers (13) et/ou des boutons (14). Les moyens de commande (5) du tracteur (2) pour animer une machine (1) sont avantageusement des actionneurs tel qu'un attelage (15) ou tel qu'un arbre de prise de force (16). Un moyen de commande (5) peut également être un distributeur de puissance tel qu'un distributeur hydraulique (17) ou tel qu'un distributeur électrique de puissance. D'une manière générale et comme représenté sur la figure 2, l'équipement standard d'un tracteur (2) est composé d'un attelage (15) et d'un arbre de prise de force (16) à l'arrière et de distributeurs hydrauliques (17). Les tracteurs plus récents présentent également un attelage et un arbre de prise de force à l'avant.

La figure 2 représente une machine (1) agricole du type combiné de semis attelée à un tracteur (2). Le tracteur (2) présente un attelage (15) arrière et un arbre de prise de force (16) arrière. L'attelage (15) est avantageusement un attelage trois points. Cette machine est semi-portée, elle est attelée aux deux bras inférieurs de l'attelage trois points du tracteur (2) au moyen d'une barre d'attelage (20). Le combiné de semis comprend un timon (21) et s'appuie au sol au moyen d'un chariot (22) équipé de roues. Elle est composée d'un outil de travail du sol (23) et d'un semoir (24). L'outil de travail du sol (23) prépare le lit de semence. Dans l'exemple représenté, il s'agit d'une herse rotative qui comporte des rotors liés au caisson, les rotors sont équipés chacun de deux lames (25). Les rotors sont entrainés autour d'un axe vertical respectif à partir de l'arbre de prise de force (16) du tracteur (2). L'arbre de prise de force (16) entraîne les rotors via un carter central au moyen d'une transmission (26) telle qu'un arbre télescopique à joints universels. L'émiettement de la terre obtenu dépend de la vitesse de rotation des rotors, de la vitesse d'avance et de la consistance du sol. La herse rotative comporte à l'arrière un rouleau (27) pour rappuyer le sol et contrôler la profondeur de travail.

L'outil (23) s'étend sensiblement horizontalement et perpendiculairement à la direction d'avance (A). Il est disposé entre le timon (21) et le chariot (22). Il est relié d'une part au timon (21) via un premier parallélogramme (28) et est relié d'autre part au chariot (22) via un deuxième parallélogramme (29). Chaque parallélogramme (28, 29) est déformable à l'aide d'un vérin respectif (30, 31). Les parallélogrammes (28, 29) permettent un dégagement sensiblement vertical et sensiblement parallèlement au sol de l'outil (23). Le déplacement sensiblement parallèle à la surface du sol est obtenu grâce à une alimentation synchronisée des vérins (30, 31). Une description plus détaillée de ces éléments est disponible dans le document FR 05 53622.

Lors du travail, l'utilisateur n'intervient pas sur la hauteur de l'attelage (15) du tracteur (2). Le pilotage du déplacement vertical de l'outil (23) est pris en charge par le boîtier électronique (10) en combinaison avec le système de surveillance (11). Le boîtier électronique (10) est relié au système de surveillance (11) composé entre autres d'un capteur (32) contrôlant la vitesse de rotation au niveau de la transmission (26) de la herse rotative. Par le contrôle de la vitesse de rotation de la transmission (26), le boîtier électronique (10) est informé de la rotation de l'arbre de prise de force (16) du tracteur (2). La transmission (26) étant reliée à l'arbre de prise de force (16) du tracteur (2) pour le travail.

En fonction des informations de fonctionnement et/ou de position reçues du système de surveillance (11), le boîtier électronique (10) est en mesure de piloter automatiquement la ou les actions des organes spécifiques (9) de la machine (1). Des programmes sont enregistrés dans le boîtier électronique (10) sous forme de séquences pour les actions récurrentes se déclenchant par exemple lors de demi-tour en bout de champ. Ainsi, le boîtier électronique (10) commande l'action : dégagement de l'outil (23) vers le haut par l'alimentation des deux vérins (30, 31), lorsque le capteur (32) détecte une vitesse de rotation nulle au niveau de la transmission (26). Lorsque la vitesse de rotation de la transmission (26) est nulle, c'est que l'utilisateur a appuyé sur le bouton (14) ou actionné le levier (13) provoquant l'arrêt de l'arbre de prise de force (16) ou que l'arrêt de l'arbre de prise de force (16) faisait partie intégrante d'une séquence du tracteur (2) lancée par l'utilisateur. Il est connu de programmer les actions récurrentes se déclenchant lors de demi-tour en bout de champ sous forme de séquences à partir du dispositif de commande (6) pour le tracteur (2).

Le boîtier électronique (10) de la machine (1) pilote les fonctions spécifiques de l'outil (23) d'une part et du semoir (24) d'autre part. Le semoir (24) est placé derrière l'outil (23) compte tenu de la direction d'avance (A). Ainsi, la préparation du sol et le semis sont réalisés en un seul passage. Grâce à cette combinaison, les temps de travaux pour l'implantation sont réduits, les tassements du sol sont limités et les coûts sont diminués. Le semoir (24) est composé, de manière connue, notamment d'une trémie (33) et d'organes (34) d'enterrage ou de mise en terre. La trémie (33) est, de préférence, disposée sur le chariot (22) et les organes d'enterrage (34) sont accrochés derrière ledit chariot (22) de manière déplaçable en hauteur au travers d'un attelage et de vérins. La trémie (33) constitue la réserve de graines et une distribution permet d'extraire de la trémie (33), une quantité déterminée de produit et de maintenir ce dosage constant quelles que soient les conditions de travail. Dans le cas d'un semoir à transport pneumatique, la graine est transportée vers les organes (34) dans des tuyaux souples par un flux d'air. Le flux d'air est généré par une turbine entraînée par exemple par l'arbre de prise de force (16) du tracteur (2). Grâce au transport pneumatique des graines jusqu'aux organes (34), la largeur de travail n'est pas conditionnée par la largeur de la trémie (33). L'organe (34) crée un sillon à une profondeur déterminée pour y placer la graine et la recouvrir de terre. L'organe (34) de mise en terre est généralement associé à un organe de recouvrement.

Le semoir (24) étant disposé à l'arrière de l'outil (23), il est intéressant de décaler le semis pour éviter de déposer les graines dans un sol non émietté et non nivelé. La séquence spécifique "début de travail" du boîtier électronique (10) permet de gérer le démarrage décalé du semoir (24) par rapport à l'outil (23). Le boîtier électronique (10) est capable de déterminer, grâce aux paramètres propres de la machine (1), l'endroit où le semoir (24) doit commencer le semis. Le décalage entre la mise en terre de l'outil (23) et celle des organes d'enterrage (34) du semoir (24) permet une réduction de la largeur des fourrières aux extrémités du champ.

Grâce au mode de détection automatique, le boîtier électronique (10) peut ainsi commander la séquence d'actions : dégagement de la herse rotative, arrêt de la distribution et relevage des organes (34) d'enterrage lorsque la rotation de la transmission (26) respectivement de l'arbre de prise de force (16) est arrêtée à l'approche d'une extrémité de champ. Pour cela, l'utilisateur a appuyé soit sur le bouton (14) commandant l'arrêt de la rotation de l'arbre de la prise de force (16) ou soit sur le bouton de lancement de séquence du tracteur (2) incluant l'arrêt de la rotation de l'arbre de prise de force (16). Dès que l'arbre de la prise de force (16) ne tourne plus, l'outil (23) est dégagé du sol et le tracteur (2) continu d'avancer, les organes (34) du semoir se relèvent automatiquement pour pouvoir faire un demi-tour à la fin du champ. Pour reprendre le travail lorsque la machine (1) et le tracteur (2) sont alignés, l'utilisateur va appuyer sur le bouton pour faire tourner l'arbre de prise de force (16). Le capteur (32) détecte ce changement d'état et envoie une information au boîtier électronique (10) qui commande la séquence d'actions : rétraction des vérins (30, 31), la mise en terre de l'outil (23), démarrage de la distribution des graines et abaissement des organes (34) d'enterrage pour le semis. L'outil (23) comme le semoir (24) sont en contact avec la terre durant le travail alors que pour le transport ils sont relevés.

Grâce à ce procédé de commande en détection automatique, les manipulations de l'utilisateur sont donc simplifiées. L'utilisateur n'interviendra qu'au niveau d'un levier (13) ou d'un bouton (14) en amont du demi-tour et il pourra donc être plus attentif et disponible pour la conduite du tracteur (2). La séquence de demi-tour de la machine (1) est synchronisée avec la séquence de demi-tour du tracteur (2). La productivité de machine est améliorée car le temps nécessaire pour les manoeuvres de demi-tour est réduit. Les risques d'interférence entre le tracteur (2) et la machine (1) seront réduits. D'autre part, le boîtier électronique (10) comporte les paramètres inhérents de la machine et tous les programmes nécessaires à son fonctionnement. Ainsi même si une machine a un fonctionnement complexe, le boîtier électronique (10) est en mesure de la commander. Il s'appuie sur le système de surveillance (11), notamment sur les informations des capteurs montés sur la machine. Ce procédé de commande est fonctionnel quel que soit le tracteur qui est tiré ou anime la machine.

La barre d'attelage (20) est liée au timon (21) par l'intermédiaire d'une articulation (35) d'axe sensiblement vertical. Grâce à cette articulation (35) permettant des angles d'évolution importants entre le timon (21) et la barre d'attelage (20) reliée aux bras inférieurs de l'attelage du tracteur (2), la surface d'évolution au bord du champ notamment pour le demi-tour est donc réduite et la manoeuvrabilité pour aligner la machine (1) avec le tracteur (2) est améliorée. Ces angles d'évolution importants nécessite l'arrêt de l'arbre de prise de force (16) lors de chaque demi-tour et rend le procédé décrit particulièrement intéressant. Dans un exemple de réalisation non représenté, l'extrémité du timon (21) est pourvue d'un anneau d'attelage ou d'une boule d'attelage. Une telle articulation (35) n'est alors pas nécessaire car l'anneau ou la boule d'attelage autorise le mouvement de pivotement autour d'un axe vertical.

D'autres fonctions spécifiques de la machine (1) sont exécutées à partir du boîtier électronique (10) par exemple la fonction "traceur" ou la fonction "fertilisation". Le semoir (24) possède des traceurs latéraux qui marquent des lignes que le tracteur (2) suivra au prochain passage. Le boîtier électronique (10) avec un programme adéquat gère la descente respectivement la montée des traceurs latéraux. Lorsqu'une fertilisation est adaptée sur le semoir (24), le semis et l'apport d'engrais sont réalisés en un seul passage. Le boîtier électronique (10) pilote alors aussi le démarrage/l'arrêt du dispositif de dosage de la fertilisation. Le semoir (24) est équipé de socs fertiliseurs en plus des organes (34) d'enterrage tels que socs de semis. Dans ce cas la trémie (33) est divisée en deux parties, un côté pour les graines et l'autre côté pour les engrais. Une alternative est de prévoir une trémie supplémentaire accolée à la trémie (33) du semoir.

Dans le cas d'une machine repliable, la transmission (26) est remplacée par une transmission primaire et deux transmissions secondaires. Un capteur (32) est disposé sur chaque transmission secondaire. Selon un autre exemple de réalisation non représenté, l'outil (23) et le semoir (24) sont réalisés en plus de deux parties.

Selon la technicité de la machine (1), le boîtier électronique (10) est constitué de plusieurs sous-ensembles. Dans le cas d'une machine agricole (1) avec un pupitre (12), ce dernier est placé dans le poste de conduite (4). Il comporte des éléments de commande et /ou des afficheurs. Une poignée de commande peut être associée au pupitre (12). Elle permet de faciliter l'accès aux commandes.

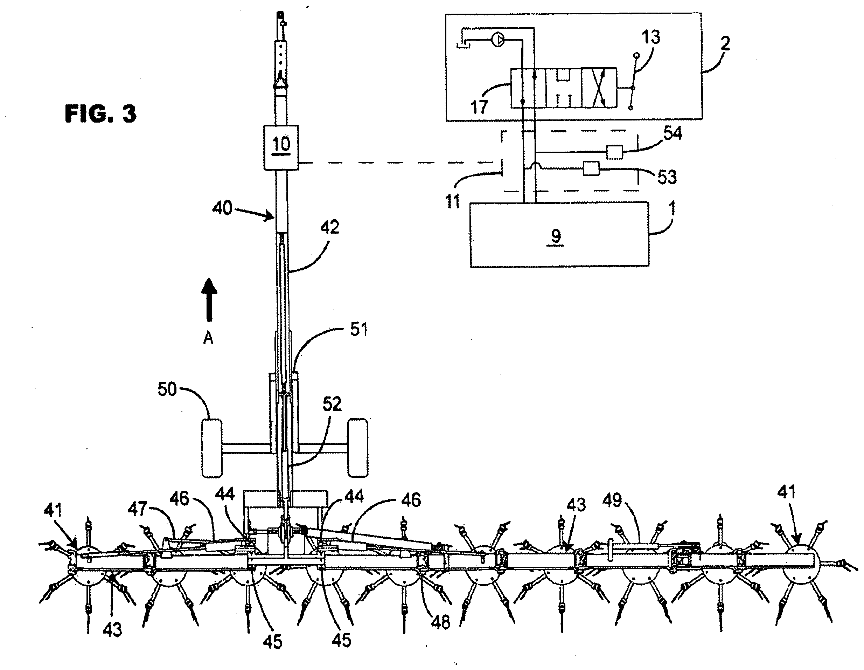

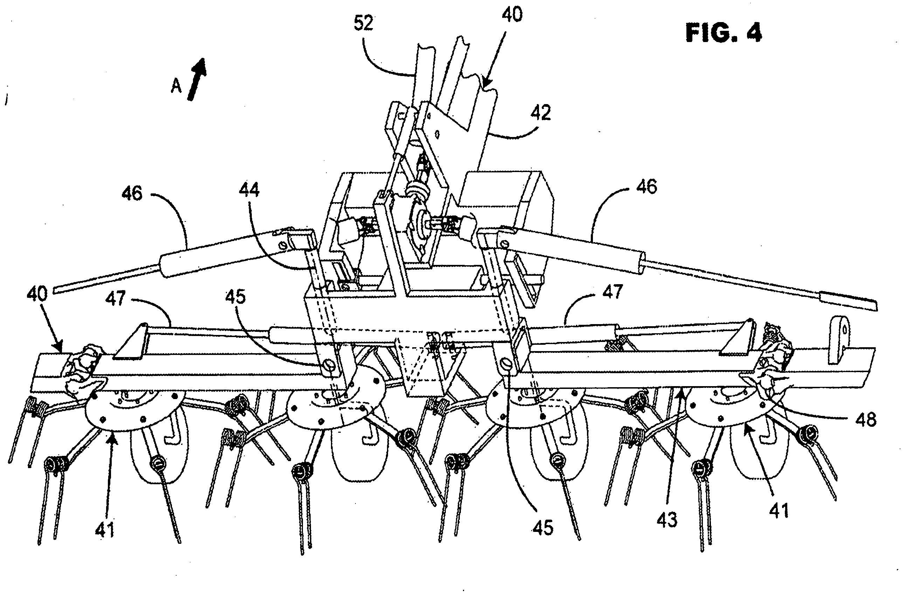

La figure 3 représente une machine de fenaison, notamment une faneuse comportant un bâti (40) pouvant être accouplé à un tracteur servant à l'animer et à la déplacer dans une direction d'avance (A). La figure 3 est une vue de dessus partielle. Le bâti (40) porte plusieurs rotors (41) de fanage pouvant occuper une position de travail dans laquelle ils sont sensiblement perpendiculaires à la direction d'avance (A) et une position de transport dans laquelle les rotors (41) sont repliés vers le milieu et vers l'avant de la machine en vue de réduire sa largeur et sa hauteur. Le bâti (40) comprend une structure centrale (42) et deux structures latérales (43) qui portent les rotors (41). La figure 4 représente une partie du bâti (40) de la machine (1). Les structures latérales (43) sont articulées sur la structure centrale (42) au moyen d'axes (44) sensiblement verticaux. Chaque structure latérale (43) comporte un axe d'articulation (45) sensiblement horizontal et dirigé dans la direction d'avance (A) en position de travail. Un premier vérin hydraulique (46) est associé à chaque structure latérale (43) pour la déplacer autour de l'axe d'articulation (45) correspondant. Un deuxième vérin hydraulique (47) est associé à chaque structure latérale (43) pour la déplacer autour de l'axe d'articulation (44) sensiblement vertical. D'une manière connue, chaque structure latérale (43) comporte un tronçon intérieur portant deux rotors (41) et cinq tronçons latéraux portant chacun un rotor (41). Le nombre de tronçons latéraux peut varier en fonction de la largeur de travail souhaitée. Les différents tronçons sont reliés entre eux au moyen d'axe d'articulation (48) dirigés dans la direction d'avance (A) en position de travail. Ces axes d'articulation (48) permettent aux tronçons de pivoter les uns par rapport aux autres pour suivre les dénivellations du sol. Lesdits pivotements sont limités au moyen de butées situées de part et d'autre des axes d'articulation (48).

Chaque structure latérale (43) comporte deux tronçons latéraux situés les plus à l'extérieur qui sont repliables d'un angle d'environ 180° autour de l'axe d'articulation (48) de l'avant dernier tronçon latéral. Ceci permet de replier les tronçons latéraux extérieurs sur les tronçons voisins en vue de réduire la largeur des structures latérales (43) notamment en vue du transport. Ledit repliage est assuré de chaque côté au moyen d'un troisième vérin hydraulique (49) correspondant. La partie avant de la structure centrale (42) comporte des roues d'appui (50) qui roulent sur le sol au travail et au transport. Dans la position de travail, elles portent la partie avant en vue de décharger les roues des rotors (41). Dans la position de transport, elles portent en sus la partie arrière et les structures latérales (43). Lesdites roues (50) sont disposées sur des supports déplaçables dans le sens de la hauteur autour d'un axe (51). Un quatrième vérin hydraulique (52) permet de lever ou d'abaisser les roues d'appui (50) autour de l'axe (51). Des détails complémentaires pour cette faneuse sont disponibles dans le document FR 2 890 526.

Le tracteur (2), les organes spécifiques (9) notamment les vérins (46, 47, 49, 52) de la machine (1) et le système de surveillance (11) sont représentés de manière schématique sur la figure 3. Les vérins sont reliés par un circuit hydraulique à la source hydraulique comprenant un réservoir, une pompe et au moins un distributeur (17). Une telle source hydraulique est en générale disponible sur le tracteur (2) tractant la machine (1). Il pourrait cependant également être prévu qu'elle fasse partie partiellement ou totalement de ladite machine (1). Le distributeur (17) peut être placé dans trois positions. Le levier (13) permet de sélectionner l'une des positions. Le système de surveillance (11), composé de deux capteurs (53, 54), permet de détecter le sens du flux d'huile dans le circuit. Les capteurs mesurent la pression et/ou le débit d'huile au niveau de la sortie de la source hydraulique. Dans le cas d'une faneuse telle que décrite précédemment, le boîtier électronique (10) contient un programme avec au moins deux séquences d'actions particulièrement une séquence d'actions relative aux mouvements de fermeture et une autre relative aux mouvements d'ouverture.

Lorsque l'un des capteurs (53, 54) va détecter une pression dans l'une des conduites du circuit, le boîtier électronique (10) en est informé et commande alors la séquence d'actions adéquate. Sur le schéma de la figure 3, l'utilisateur actionne le levier (13) pour commander l'ouverture de la faneuse. Le capteur (53) détecte une pression importante dans la première conduite d'alimentation. Cette détection va déclencher une suite d'actions de mouvements pour les éléments de la faneuse pour passer à la position travail. Tout d'abord, l'alimentation des deuxièmes vérins (47) de sorte qu'ils déplacent les structures latérales (43) vers l'arrière autour des axes d'articulation (44) sensiblement verticaux. Puis, l'alimentation du quatrième vérin (52) pour lever les roues (50), suivra l'alimentation des premiers vérins (46) de sorte qu'ils abaissent les structures latérales (43) autour des axes d'articulation (45) jusque dans une position où les roues des rotors (41) touchent le sol et pour terminer l'alimentation des troisièmes vérins (49) pour déplier les deux tronçons latéraux extérieurs. Les différents vérins sont équipés de capteurs de fin de course, ce qui permet en liaison avec le boîtier électronique (10) de s'assurer du déroulement complet de chaque action. Un capteur de position est également prévu au niveau de l'axe d'articulation (44).

Lorsque l'utilisateur désire passer à la position de transport, il actionne le levier (13) dans l'autre sens et c'est alors l'autre capteur (54) qui détecte un changement d'état par rapport à la pression d'huile qui est importante et ce capteur (54) renseigne le boîtier électronique (10). Cette détection entraîne, sous le contrôle du boîtier électronique (10), la commande de la séquence d'actions pour la fermeture. L'ordre des actions décrites ci-dessus est alors inversé. Le boîtier électronique (10) commande le repliage des deux tronçons latéraux extérieurs via les troisièmes vérins (49) puis le soulèvement des structures latérales (43) autour des axes d'articulation (45) sensiblement horizontaux jusque dans une position où les roues des rotors (41) ne touchent plus le sol via les premiers vérins hydrauliques (46). Ensuite la garde au sol est augmentée (les roues (50) de la structure centrale (42) sont abaissées) via le quatrième vérin hydraulique (52) et finalement le déplacement des structures latérales (43) vers l'avant autour des axes d'articulation (44) sensiblement verticaux via les deuxièmes vérins (47). Dans cette position les deux structures latérales (43) sont sensiblement parallèles, la largeur totale de la machine étant alors inférieure à la largeur totale dans la position de travail des deux rotors (41) situés au milieu de la machine. Lesdites structures latérales (43) peuvent alors reposer sur des appuis prévus sur la structure centrale (42) et peuvent y être immobilisées.

Grâce au système de surveillance (11) et au contrôle du boîtier électronique (10), les différents mouvements des structures latérales (43) sont coordonnés et se déroulent successivement indépendamment de l'expérience de l'utilisateur. Le risque d'interférence entre les différents rotors (41), les structures latérales (43) et la structure centrale (41) est supprimé. Pour une sécurité optimale du procédé de commande, les différentes positions des tronçons latéraux extérieurs, des structures latérales (43) sont contrôlées par des capteurs de position.

L'invention s'applique à toute machine mettant en oeuvre le procédé de commande décrit.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

La machine de l'invention est portée, traînée ou semi-portée.

## Revendications

1. Procédé de commande d'une séquence d'actions, à réaliser dans un ordre logique, chronologique et dans un temps donné, pour une machine agricole (1), lors d'une séquence de demi-tour de ladite machine agricole (1) ou lors d'une séquence pour passer d'une position de travail à une position de transport ou vice versa d'une machine agricole (1) de fenaison, ladite machine agricole (1) étant équipée d'un boîtier électronique (10) et étant attelée à un tracteur (2), ledit tracteur (2) comprenant au moins un moyen de commande (5),
**caractérisé en ce que** la séquence d'actions à réaliser au niveau de ladite machine agricole (1) est déclenchée de manière automatique via le contrôle du boîtier électronique (10) par détection d'un changement d'état d'un des moyens de commande (5) dudit tracteur (2) par l'intermédiaire d'un système de surveillance (11) qui renseigne ledit boîtier électronique (10), lequel pilote automatiquement les différents organes spécifiques (9) de ladite machine agricole (1) via au moins une séquence, ledit changement d'état étant déclenché par une action de l'utilisateur, **en ce que** ledit boîtier électronique (10) est constitué d'un microprocesseur associé à un ou plusieurs programmes et **en ce que** ledit boîtier électronique (10) comporte les paramètres inhérents de la machine et tous les programmes nécessaires à son fonctionnement.

2. Procédé de commande selon la revendication 1, **caractérisé en ce que** ledit moyen de commande (5) est un actionneur en liaison avec ladite machine agricole (1).

3. Procédé de commande selon la revendication 1 ou 2, **caractérisé en ce que** ledit moyen de commande (5) en liaison avec ladite machine agricole (1) est un arbre de prise de force (16) relié à une transmission (26) de ladite machine agricole (1) et que ledit système de surveillance (11) est composé d'un capteur (32) mesurant la vitesse de rotation.

4. Procédé de commande selon la revendication 1 ou 2, **caractérisé en ce que** ledit moyen de commande (5) en liaison avec ladite machine (1) est un distributeur hydraulique (17) et que ledit système de surveillance (11) est composé d'au moins un capteur de pression ou de débit.

5. Procédé de commande selon l'une quelconque des revendications 1 à 4, **caractérisé en ce que** ledit système de surveillance (11) est disposé sur ladite machine agricole (1) et/ou sur ledit tracteur (2).

6. Procédé de commande selon la revendication 5, **caractérisé en ce que** lorsque le système de surveillance (11) est disposé sur le tracteur (2), ledit boîtier électronique (10) a un accès à l'information via un réseau de communication ou via une prise d'information directe dans le poste de conduite (4) au travers d'un connecteur de signaux.

7. Procédé de commande selon l'une quelconque des revendications 1 à 6, **caractérisé en ce que** ledit boîtier électronique (10) est constitué de plusieurs boîtiers constitués chacun d'un microprocesseur et d'un programme reliés entre eux par un moyen de communication et ledit boîtier électronique (10) pilote les différents organes spécifiques (9) de ladite machine agricole (1) via au moins une séquence.

8. Machine agricole pour la mise en oeuvre du procédé de commande d'une séquence d'actions, ladite machine (1) est équipée d'un boîtier électronique (10) et étant attelée à un tracteur (2), ledit tracteur (2) comprenant au moins un moyen de commande (5), **caractérisée en ce que** la séquence d'actions est commandée par un procédé selon l'une quelconque des revendications 1 à 7.

9. Machine agricole attelée à un tracteur selon la revendication 8, **caractérisée en ce que** ladite machine agricole (1) comporte un pupitre de commande (12).

## Patentansprüche

1. Verfahren zum Steuern einer Folge von Aktionen, die in einer logischen und chronologischen Reihenfolge und in einer gegebenen Zeit auszuführen sind, für eine landwirtschaftliche Maschine (1), während einer Wendesequenz der landwirtschaftlichen Maschine (1) oder während einer Sequenz zur Verschiebung einer landwirtschaftlischen Heuwerbungsmaschine (1) von einer Arbeitsposition in eine Transportposition oder umgekehrt, wobei die landwirtschaftlische Maschine mit einer elektronischen Steuereinheit (10) ausgestattet und an einen Traktor (2) gekuppelt ist, wobei der Traktor (2) mindestens ein Betriebsmittel (5) umfasst, ***dadurch gekennzeichnet,* dass** die Folge von Aktionen, die auf Höhe der landwirtschaftlichen Maschine (1) auszuführen sind, automatisch über die Kontrolle der elektronischen Steuereinheit (10) durch Erkennen eines Zustandswechsels eines der Betriebsmittel (5) des Traktors (2) mittels eines Überwachungssystems (11), das die elektronische Steuereinheit (10) informiert, ausgelöst werden, welche elektronische Steuereinheit die verschiedene kennzeichnende Elemente (9) der landwirtschaftlichen Maschine (1) über mindestens eine Sequenz automatisch steuert, wobei der Zustandswechsel durch eine Aktion des Benutzers ausgelöst wird, dass die elektronische Steuereinheit (10) von einem Mikroprozessor, der mit einem oder mehreren Programm(e) verbunden ist, gebildet ist und, dass die elektronische Steuereinheit (10) die der Maschine inhärenten Parameter und alle für Ihren Betrieb nötigen Programme umfasst.

2. Verfahren zum Steuern nach Anspruch 1, ***dadurch gekennzeichnet,* dass** das Betriebsmittel (5) ein Betätigungselement in Verbindung mit der landwirtschaftlichen Maschine (1) ist.

3. Verfahren zum Steuern nach Anspruch 1 oder 2, ***dadurch gekennzeichnet,* dass** das Betriebsmittel (5) in Verbindung mit der landwirtschaftlichen Maschine (1) eine Zapfwelle (16) ist, die mit einer Übertragungsvorrichtung (26) der landwirtschaftlichen Maschine (1) verbunden ist, und dass das Überwachungssystem (11) aus einem Sensor (32) besteht, der die Drehzahl misst.

4. Verfahren zum Steuern nach Anspruch 1 oder 2, ***dadurch gekennzeichnet,* dass** das Betriebsmittel (5) in Verbindung mit der landwirtschaftlichen Maschine (1) ein Hydraulikverteiler (17) ist, und dass das Überwachungssystem (11) aus mindestens einem Druck- oder Durchflusssensor besteht.

5. Verfahren zum Steuern nach irgend einem der Ansprüche 1 bis 4, ***dadurch gekennzeichnet,* dass** das Überwachungssystem (11) auf der landwirtschaftlichen Maschine (1) und/oder auf dem Traktor (2) angeordnet ist.

6. Verfahren zum Steuern nach Anspruch 5, ***dadurch gekennzeichnet,* dass**, wenn das Überwachungssystem (11) auf dem Traktor (2) angeordnet ist, die elektronische Steuereinheit (10) über ein Kommunikationsnetz oder über eine direkte Informationserhebung im Führerstand (4) durch einen Signalverbinder Zugang zur Information hat.

7. Verfahren zum Steuern nach irgend einem der Ansprüche 1 bis 6, ***dadurch gekennzeichnet,* dass** die elektronische Steuereinheit (10) aus mehreren Einheiten besteht, die jeweils aus einem Mikroprozessor und einem Programm bestehen, die über ein Kommunikationsmittel miteinander verbunden sind, und die elektronische Steuereinheit (10) die unterschiedlichen kennzeichnenden Elemente (9) der landwirtschaftlichen Maschine (1) über mindestens eine Sequenz steuert.

8. Landwirtschaftliche Maschine für die Umsetzung des Verfahrens zum Steuern einer Aktion oder einer Folge von Aktionen, wobei die landwirtschaftliche Maschine (1) mit einer elektronischen Steuereinheit (10) ausgestattet und an einen Traktor (2) gekuppelt ist, wobei der Traktor (2) mindestens ein Betriebsmittel (5) umfasst, ***dadurch gekennzeichnet,* dass** die Aktion oder die Folge von Aktionen durch ein Verfahren nach irgend einem der Ansprüche 1 bis 7 gesteuert wird.

9. Landwirtschaftliche Maschine, die an einen Traktor gekuppelt ist, nach Anspruch 8, ***dadurch gekennzeichnet,* dass** die landwirtschaftliche Maschine (1) ein Steuerpult (12) umfasst.

## Claims

1. Control process for a sequence of actions to perform in a logical and chronological order and in a given space of time for an agricultural machine (1) during a U-turn sequence of the said agricultural machine (1) or during a sequence for shifting an agricultural haymaking machine (1) from a work position to a transport position or vice-versa, the said agricultural machine (1) being fitted with an electronic control unit (10) and hitched to a tractor (2), the said tractor (2) including at least one control means (5), ***characterised in* that** the sequence of actions to be performed by the said agricultural machine (1) is triggered automatically via the control of the electronic control unit (10) by detecting a change of state in one of the control means (5) of the said tractor (2) through a monitoring system (11) that informs the said electronic control unit (10), which automatically runs the various specific elements (9) of the said agricultural machine (1) via at least one sequence, the said change of state being triggered by an action by the user, **in that** the said electronic control unit (10) is comprised of a microprocessor associated with one or several programs and **in that** the said electronic control unit (10) includes the inherent parameters of the machine and all of the programs necessary for its operation.

2. Control process according to claim 1, ***characterised in* that** the said control means (5) is an actuator connected to the said agricultural machine (1).

3. Control process according to claim 1 or 2, ***characterised in* that** the said control means (5) connected to the said agricultural machine (1) is a power take-off shaft (16) connected to a transmission (26) of the said agricultural machine (1) and that the said monitoring system (11) is comprised of a sensor (32) measuring the rotational speed.

4. Control process according to claim 1 or 2, ***characterised in* that** the said control means (5) connected to the said agricultural machine (1) is a hydraulic distributor (17) and that the said monitoring system (11) is comprised of at least one pressure or rate sensor.

5. Control process according to any one of the claims 1 to 4, ***characterised in* that** the said monitoring system (11) is positioned on the said agricultural machine (1) and/or the said tractor (2).

6. Control process according to claim 5, ***characterised in* that** when the monitoring system (11) is placed on the tractor (2), the said electronic control unit (10) has access to the information via a communication network or a direct information feed in the driver's cab (4) through a signal coupler.

7. Control process according to any one of the claims 1 to 6, ***characterised in* that** the said electronic control unit (10) is comprised of several units each comprised of a microprocessor and a program connected to each other by a communication means and that the said electronic control unit (10) controls the various specific elements (9) of the said agricultural machine (1) via at least one sequence.

8. Agricultural machine for the implementation of the action/action sequence control process, the said agricultural machine (1) being equipped with an electronic control unit (10) and hitched to a tractor (2), the said tractor (2) including at least one control means (5), ***characterised in* that** the action or sequence of actions is controlled by a process according to any one of the claims 1 to 7.

9. Agricultural machine hitched to a tractor according to claim 8, ***characterised in* that** the said agricultural machine (1) includes a control desk (12).
